# EUROPÄISCHE PATENTANMELDUNG

(11) **EP 0 535 517 A2**
(43) Veröffentlichungstag der Anmeldung: **07.04.1993**
(21) Anmeldenummer: 92116236.8
(22) Anmeldetag: 23.09.1992
(51) Int. Cl.: G01N 13/00, G01N 19/04

(54) **Verfahren zur Messung der Oberflächenenergie von Folien**

(30) Priorität: 04.10.1991 DE 4132950
(71) Anmelder: AFS ENTWICKLUNGS + VERTRIEBS GMBH, D-86344 Neusäss (DE)
(72) Erfinder: Arlt, Gerhard, W-8901 Diedorf (DE); Rapp, Bertram, Dr., W-8900 Augsburg (DE)
(74) Vertreter: Charrier, Rolf, Dipl.-Ing.

(57) **Zusammenfassung**

Zum Bedrucken von Kunststofferzeugnissen ist es erforderlich, deren Oberfläche zunächst einer energiereichen Vorbehandlung zu unterziehen. Diese Prozedur erhöht die Oberflächenenergie des Kunststoffteils und damit die Haftfähigkeit der Farbe. Ein typisches Beispiel hierzu ist die Anwendung einer Corona-Entladung auf eine Folie (3).

Um die Leistung des Coronagenerators, und damit die Vorbehandlungsstärke zu steuern, muß die Oberflächenenergie der auslaufenden Folie (3) ständig kontrolliert werden. Dies geschieht bislang manuell mit sogenannten Prüftinten, was umständlich ist und keine automatische Regelung des Coronagenerators zuläßt.

Kern der vorliegenden Erfindung ist es, die Oberflächenenergie einer Folie (3) durch deren Haftfähigkeit zu ermitteln. In einer Ausführungsform wird dabei die Folie (3) über zwei Rollen (1, 2) geführt und die Abweichung ihres Verlaufs (8) von der gemeinsamen Tangente (7), erzeugt durch Anhaften an der ersten Rolle (1), ausgewertet. Die Auswertung erfolgt beispielsweise durch Reflexion eines Laserstrahls (13). In einer weiteren Ausführungsform wird die Folie (3) über eine abgebremste Rolle (1) geführt und die Drehmomentübertragung von der Folie (3) auf diese Rolle (1) gemessen. In einer dritten Ausführungsform gleitet ein Lappen (19) auf der Folie (3), wobei die Gleitreibungskraft gemessen wird. In allen Fällen kann das Primärsignal unter Einbeziehung verschiedener Prozeßparameter aufbereitet werden und dient dann als Wert für die Oberflächenenergie der Folie (3), womit beispielsweise ein Coronagenerator geregelt werden kann.

## Beschreibung

Die Erfindung betrifft ein Verfahren zur Messung der Oberflächenenergie einer sich in einer Richtung fortbewegenden Folie durch Messung der Oberflächenkräfte nach dem Oberbegriff der Patentansprüche 1, 12 und 16, wie aus der DE-OS 22 25 946 bekannt.

Im einzelnen dient die Erfindung der meßtechnischen Erfassung von Oberflächeneigenschaften von Folien, welche durch deren energiereiche Behandlung beeinflußt werden. Obwohl im folgenden nur von Polymerfolien gesprochen wird, sei darauf hingewiesen, daß das Verfahren in gleicher Weise auch zur meßtechnischen Erfassung der Oberflächeneigenschaften anderer Warenbahnen eingesetzt werden kann. Diese können beispielsweise aus Papier oder Metall bestehen.

Folien, vorwiegend solche aus Polyolefinen, besitzen nach ihrer Herstellung eine relativ geringe Oberflächenenergie. Diese macht sich z.B. im kugeligen Aussehen eines auf diese Oberfläche gebrachten Flüssigkeitstropfens bemerkbar. In vielen Fällen, vor allem in der Verpackungsindustrie, sollen solche Oberflächen mit Farbe bedruckt oder z.B. mit Klebstoff beschichtet werden. Dies ist infolge der flüssigkeitsabweisenden Eigenschaft der Oberfläche infolge ihrer geringen Oberflächenenergie nicht direkt möglich. Die Beschichtungsflüssigkeit oder die Farbe perlen auf der Oberfläche ab und schnüren sich zu Tropfen zusammen.

Um eine Kunststoffolie benetzbar bzw. bedruckbar zu machen, muß deren Oberflächenenergie erhöht werden. Dies geschieht üblicherweise durch eine energiereiche Behandlung dieser Oberfläche. Beispielsweise bestrahlt man die Folie mit intensivem ultraviolettem Licht, beflammt sie oder setzt sie einer Plasmaumgebung aus. Ein weit verbreitetes und auch bei der Folienproduktion in die Fertigung integrierbares Verfahren ist die Corona-Behandlung. Die direkt vom Extruder oder von einer Rolle kommende Folie durchläuft dabei eine Corona-Entladung, welche über ihre gesamte Breite reicht.

Die Wirkung dieser energiereichen Vorbehandlung auf die physikalisch-chemische Struktur der Oberfläche ist nicht vollständig bekannt. Eine Hypothese ist, daß durch diese Behandlung Bindungen innerhalb der Molekülketten aufgebrochen werden. Damit vergrößert sich bei der Behandlung die Anzahl der nicht innerhalb einer Polymerkette liegenden Moleküle und die Oberflächenenergie erhöht sich.

Infolge einer solchen energiereichen Behandlung wird die Folie benetzbar und bedruckbar. Ein weit verbreitetes Meßverfahren für den Grad dieser Bedruckbarkeit arbeitet mit sogenannten Prüftinten. Eine Prüftinte ist eine Flüssigkeit mit einer bestimmten Oberflächenspannung. Zur Messung bestreicht man die zu untersuchende Folie hintereinander mit Prüftinten abnehmender Oberflächenspannung. Die Striche ziehen sich zu Tropfen zusammen, bis der korrekte Wert erreicht ist. Nach einer gängigen Definition muß dabei der Strich mindestens zwei Sekunden lang erhalten bleiben. Die Oberflächenspannung dieser Prüftinte ergibt dann die gesuchte Oberflächenenergie der Folie.

Diese Methode liefert zwar zufriedenstellende Meßergebnisse, ist aber in der Anwendung höchst umständlich. Ein Techniker muß nämlich in regelmäßigen, möglichst kurzen, Zeitabständen eine solche Messung an der auslaufenden Folienbahn durchführen. Um das Verhalten der Prüftinte zu beurteilen, muß der Techniker mit der Folie mitlaufen, was bei Foliengeschwindigkeiten von mehreren Metern pro Sekunde und dem sukzessiven Einsatz verschiedener Prüftinten sehr umständlich und zeitraubend ist. Weiterhin wird bei diesem Verfahren die Folie durch die Prüftinten verschmutzt, was oft deren weitere Verwendbarkeit beeinträchtigt. Eine kontinuierliche Messung während der laufenden Vorbehandlung ist aber notwendig, um die Leistung der Vorbehandlungsanlage, also beispielsweise des Corona-Generators, so einzustellen, daß die Oberflächenenergie der behandelten Folie den Sollwert aufweist.

Die eingangs genannte DE-OS 22 25 946 beschreibt eine Vorrichtung zur kontinuierlichen Relativmessung des Adhäsionsvermögens der Oberflächen von Werkstoffen, insbesondere zum Einsatz bei der Corona-Behandlung von Polymerfolien. Diese Vorrichtung besteht im wesentlichen aus einem den Corona-Generator steuernden Regler und zwei an diesen Regler angeschlossenen Meßköpfen. Die Meßköpfe sind vor bzw. nach dem Durchlauf der Polymerfolie durch das Corona-Behandlungsgerät angeordnet. Die jeweiligen Meßwerte dieser Meßköpfe werden zu einem Ergebnis verarbeitet, mit dessen Hilfe der Corona-Generator gesteuert wird. Als Meßgrößen werden die Temperatur des Materials, welche sich bei der Corona-Behandlung verändert oder die elektrostatischen Spannungen bzw. Kräfte genannt.

Die in der DE-OS 22 25 946 beschriebene Vorrichtung eignet sich aus mehreren Gründen nicht zu einer Messung der Oberflächenenergie bzw. der durch die Corona-Behandlung hervorgerufenen Oberflächenenergiedifferenz der Folie. Auf das eigentliche Problem der Messung der Oberflächenenergie, also den Aufbau der Sensoren, wird nicht eingegangen. Die angegebene Temperaturmessung ist ungeeignet, da zwischen der Oberflächenenergieänderung der Folie und ihrer Erwärmung kein definierter Zusammenhang besteht. Auch die Bestimmung der Oberflächenenergieänderung durch die Messung elektrostatischer Spannungen bzw. Kräfte ist kein geeignetes Verfahren, da die hierzu notwendigen hochempfindlichen Verfahren in einer Produktionsumgebung bei schnellaufender Folie und zahlreichen elektromagnetischen Störungen nicht anwendbar sind.

Die DE 32 16 053 A1 beschreibt ein optoelektronisches Meßverfahren zum Messen von Materialverformungen in Bearbeitungsmaschinen, bei dem ein Lichtstrahl, beispielsweise ein Laserstrahl, an dem bearbeiteten Material reflektiert und, beispielsweise von einer Diodenzeilenkamera, detektiert wird. Der vom Detektor gemessene Ort des Lichtstrahls ist dabei ein Maß für die Verformung des Materials. Das Ausgangssignal des Detektors wird einem Mikroprozessor zugeführt, welcher seinerseits das Verformungswerkzeug steuert. Der DE 32 16 053 A1 ist zwar zu entnehmen, wie eine Materialverformung optisch detektierbar ist, jedoch enthält sie keinen Hinweis darauf, daß ein solches Verfahren auf die Messung der Oberflächenenergie von Folien anwendbar ist.

Die US-PS 4,910,688 beschreibt ein Verfahren und eine Vorrichtung zur gleichzeitigen Messung von Materialeigenschaften einer Materialbahn mit Hilfe mehrerer Detektoren. Zur Messung der Oberflächenenergie gibt die US-PS 4,910,688 keine Anregungen.

Aus der DE-AS 10 12 760 ist bekannt, daß Papierbahnen zwischen zwei Trommeln durchhängen. Außerdem wird ein elektrischer Meßwertgeber zur Messung dieses Durchhangs beschrieben. Auch hier findet sich jedoch kein Hinweis auf die Anwendbarkeit zur Messung der Oberflächenenergie einer Folie.

Es stellt sich daher die Aufgabe, das Verfahren nach dem Oberbegriff der Patentansprüche 1, 12 und 16 so auszubilden, daß eine genaue Messung der Oberflächenenergie der auslaufenden Folie erfolgen kann.

Gelöst wird diese Aufgabe durch die im kennzeichnenden Teil der jeweiligen Ansprüche angegebenen Merkmale. Vorteilhafte Ausgestaltungen sind den jeweiligen Unteransprüchen entnehmbar.

Die Erfindung soll im folgenden anhand einiger Ausführungsbeispiele und unter Zuhilfenahme der Zeichnungen erläutert werden. Darin sind jeweils gleiche Teile mit gleichen Bezugszahlen versehen. Es zeigen:
- **Fig. 1**: einen Querschnitt des Laufs einer Folie über zwei Umlenkrollen;
- **Fig. 2**: einen Ausschnitt aus Figur 1 zusammen mit der schematischen Darstellung einer optischen Meßapparatur;
- **Fig. 3**: den gleichen Ausschnitt aus Figur 1 mit Darstellung der Abhängigkeit der Kontaktfläche vom Folienverlauf;
- **Fig. 4**: Querschnitt des Verlaufs einer Folie über zwei Umlenkrollen und Apparatur zur Messung der Gleitreibungskraft.

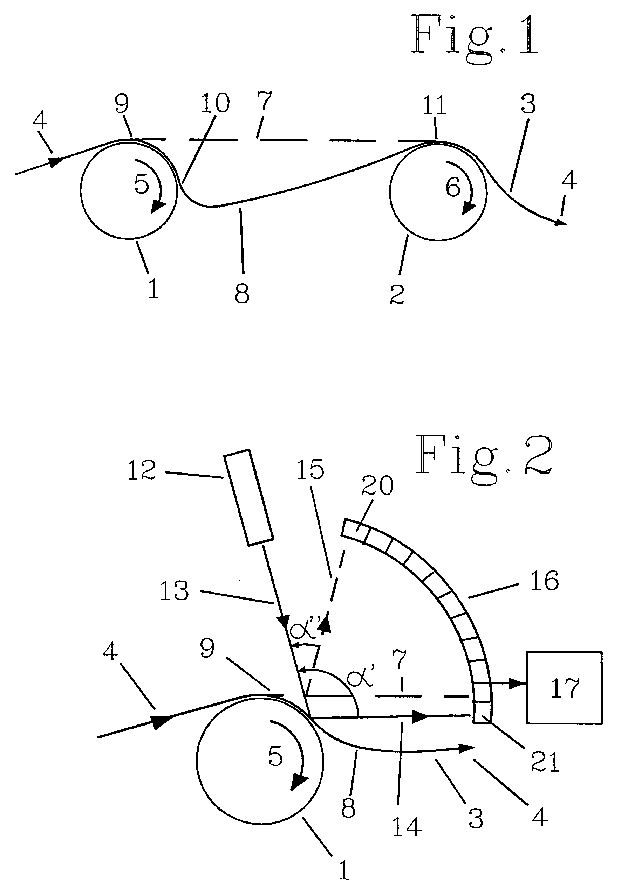

Eine erste Ausführungsform der Erfindung ist in den Figuren 1 und 2 dargestellt. Figur 1 stellt zwei Rollen, nämlich eine erste Rolle 1 und eine zweite Rolle 2, sowie eine darüberlaufende Folie 3 im Querschnitt dar. Die Bewegungsrichtung dieser Folie 3 ist durch die Pfeile 4 angedeutet. Üblicherweise drehen sich die Rollen 1 und 2 mit einer Drehzahl, bei der deren Umfangsgeschwindigkeit gleich der Geschwindigkeit der vorbeilaufenden Folie 3 ist. Diese Drehbewegung ist durch die Pfeile 5 und 6 angedeutet. Während die zweite Rolle 2 als Umlenkrolle fungiert, dient die erste Rolle 1 als Meßrolle.

Wäre zwischen der Oberfläche der ersten Rolle 1 und der Folienoberfläche keinerlei anziehende Wechselwirkung, so würde die Folie im gestrichelten kürzestmöglichen Folienverlauf 7 über die beiden Rollen 1 und 2 hinweglaufen. Zwischen den beiden Rollen 1 und 2 ist dieser Folienverlauf 7 eine Gerade mit gemeinsamer Tangente zu den beiden Rollen 1 und 2. Besteht aber zwischen erster Rolle 1 und Folienoberfläche eine anziehende Wechselwirkung, so wird die Folie 3 die erste Rolle 1 nicht frühestmöglich bei Punkt 9 verlassen. Vielmehr wird sie sich auch noch nach dem Punkt 9 an die Oberfläche der ersten Rolle 1 anschmiegen und diese erst in einem kritischen Punkt 10 verlassen. Der genaue Ort dieses Punkts 10 wird beeinflußt durch die Oberflächenbeschaffenheiten von Rolle 1 und Folie 3 sowie durch die Abzugskraft. Da die Folie 3 die zweite Rolle 2 wieder im wesentlichen am Punkt 11 erreichen muß, weist sie zwischen den beiden Rollen 1 und 2 einen gekrümmten tatsächlichen Folienverlauf 8 auf.
Wenn die Abzugskraft konstant gehalten wird und sich an der Oberfläche der Rolle 1 nichts ändert, so ist die Abweichung des tatsächlichen Folienverlaufs 8 vom kürzestmöglichen Folienverlauf 7 zwischen den beiden Rollen 1 und 2 ein Maß für die Oberflächenenergie der Folie. Das Haftenbleiben der Folie 3 an der Oberfläche der ersten Rolle 1 ist im wesentlichen auf dispersive Kräfte, also Van-der-Waals-Kräfte zurückzuführen. Daneben können auch dipolare Kräfte beim Adhäsionsvorgang eine Rolle spielen.

In jedem Falle ist darauf zu achten, daß keine freien Ladungen auf der Oberfläche der Folie 3 oder der ersten Rolle 1 vorhanden sind. Diese freien Ladungen würden durch elektrostatische Anziehung das Meßergebnis verfälschen.

Je höher die Oberflächenenergie der Folie 3 ist, desto länger wird diese Folie an der ersten Rolle 1 haften, d.h. desto später wird sie sich von ihr lösen, um in den tatsächlichen Folienverlauf 8 überzugehen. Die geometrische Form des tatsächlichen Folienverlaufs 8 ist also ein Maß für die Oberflächenenergie der Folie 3, falls alle anderen Parameter konstant gehalten werden. Wenn manche Parameter, beispielsweise Luftfeuchtigkeit, Temperatur oder Abzugskraft nicht konstant gehalten werden können, so ist die Methode dennoch anwendbar, wenn diese Parameter erfaßt und in die Aufbereitung des Meßsignals einbezogen werden. Als Materialien für die Oberflächenbeschichtung der ersten Rolle 1 kommen beispielsweise Metalle oder Kunststoffe infrage.

Die Detektion des tatsächlichen Folienverlaufs 8 gegenüber dem kürzestmöglichen Folienverlauf 7 kann auf verschiedene Weise erfolgen. In Figur 2 ist eine optische Methode dargestellt, bei der ein Laserstrahl 13 eines Lasers 12 die Folie 3 nach Verlassen der ersten Rolle 1 beleuchtet und an ihr reflektiert wird. Dabei ist die Einfallsebene senkrecht zu den Achsen der Rollen 1 und 2. Der schräg von hinten kommende Laserstrahl 13 wird nach vorn reflektiert (14) und in geeigneter Entfernung von einem Fotodiodenarray 16 detektiert. Eine Änderung des Folienverlaufs hat erheblichen Einfluß auf den Reflexionswinkel α' bzw. α''. Jedem Reflexionswinkel α ist aber eine bestimmte Fotodiode des Fotodiodenarrays 16 zugeordnet. In Figur 2 sind zwei mögliche Strahlverläufe, entsprechend zwei verschiedenen Oberflächenenergien der Folie 3, dargestellt. Für den Fall keiner oder nur sehr geringer anziehender Wechselwirkung zwischen der Oberfläche der ersten Rolle 1 und der Folie 3 gilt der gestrichelt dargestellte kürzestmögliche Folienverlauf 7. Der Laserstrahl 13 wird als Strahl 15 reflektiert und trifft auf die Fotodiode 20 des Fotodiodenarrays 16. Für den Fall einer anziehenden Wechselwirkung gilt der tatsächliche Folienverlauf 8 der Folie 3. In diesem Fall wird der einfallende Laserstrahl 13 als Strahl 14 reflektiert und trifft auf die Fotodiode 21 des Fotodiodenarrays 16. In allen dazwischenliegenden Fällen liegt der Reflexionswinkel α zwischen den beiden Werten α' und α'' und der reflektierte Strahl trifft auf eine der Fotodioden zwischen den Fotodioden 20 und 21 des Fotodiodenarrays 16. Dadurch erhält man eine Beziehung zwischen der Oberflächenenergie der Folie 3 und dem Ansprechen einzelner Fotodioden des Fotodiodenarrays 16. Das Ausgangssignal der Fotodioden wird einer Signalverarbeitungseinheit 17 zugeführt, welche auch Meßfühler für die anderen, oben genannten, prozeßrelevanten Parameter (Temperatur, Luftfeuchtigkeit, Abzugskraft uws.) umfassen kann. Das Meßsignal wird hier aufbereitet und in aufbereiteter Form zur Anzeige gebracht oder zu Regelzwecken verwendet.

In einer analogen, nicht dargestellten, Ausführungsform des optischen Meßverfahrens ist die Einfallsebene im wesentlichen senkrecht zum Verlauf der Folie 3. Der Laserstrahl trifft also von oben und von der Seite auf die Oberfläche der Folie 3 auf und wird wieder nach oben zur anderen Seite der Folie 3 hin reflektiert. Durch den gekrümmten tatsächlichen Folienverlauf 8 neigt sich die Einfallsebene dabei zum kürzestmöglichen Folienverlauf 7, was wiederum ein Maß für die Oberflächenenergie der Folie 3 darstellt. Die Neigung der Einfallsebene, und damit die Neigung des reflektierten Strahls, läßt sich wie oben dargestellt mit einem Fotodiodenarray erfassen.

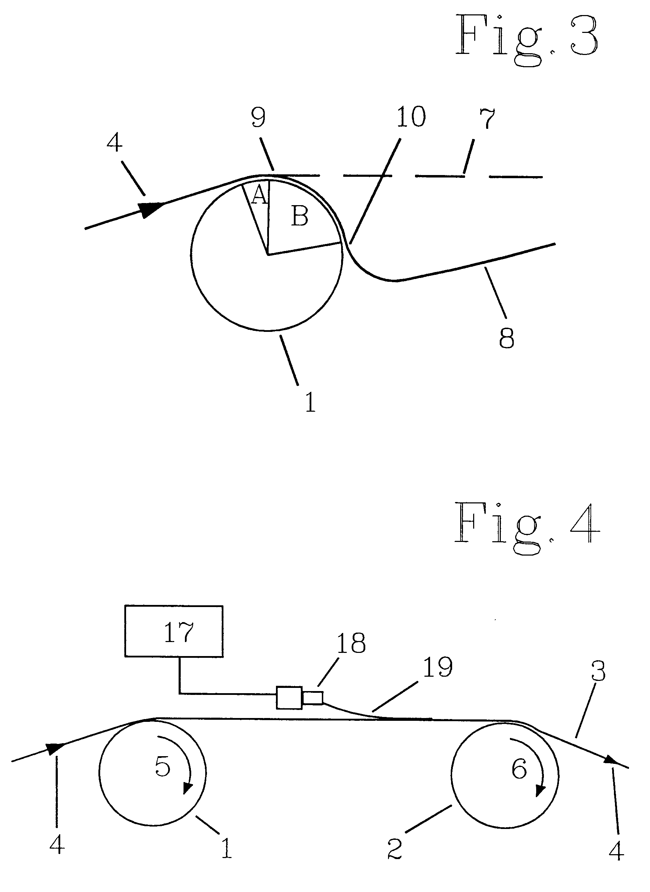

Bei einer weiteren, in Figur 3 dargestellten, Ausführungsform des Verfahrens erfolgt die Messung des tatsächlichen Folienverlaufs 8 im Vergleich zum kürzestmöglichen Folienverlauf 7 indirekt durch eine Messung der Berührungsfläche der Folie 3 mit der ersten Rolle 1. Diese Berührungsfläche ist minimal, wenn zwischen Folienoberfläche und Oberfläche der ersten Rolle 1 keine Wechselwirkung stattfindet, die Folie 3 die erste Rolle 1 also in Punkt 9 verläßt und auf dem kürzestmöglichen Folienverlauf 7 zur nächsten Rolle gelangt. Da die Breite der Folie 3 konstant bleibt, entspricht diese Berührungsfläche dem Bogen des Sektors A in Figur 3. Je später sich die Folie 3 von der Oberfläche der ersten Rolle 1 entfernt, je größer also die Haftwirkung ist, desto größer wird die Berührungsfläche der Folie 3 mit der Oberfläche der ersten Rolle 1. Bei einer großen Oberflächenenergie der Folie 3 verläßt diese die erste Rolle 1 erst im Punkt 10, womit sich der der Berührungsfläche entsprechende Bogen um den Bogen des Kreissektors B vergrößert. Diese Vergrößerung kann beispielsweise durch optische Ermittlung des Punktes 10 durchgeführt werden. Eine weitere Möglichkeit ist eine kapazitive Messung der Berührungsfläche, wobei die erste Rolle 1 eine Elektrode bildet und ihr gegenüber eine weitere Elektrode (nicht dargestellt) angeordnet ist. Die Folie 3 verläuft in diesem Fall zwischen den beiden Elektroden und bildet ein Dielektrikum.

Bei allen beschriebenen Verfahren drehen sich die Rollen 1 und 2 vorzugsweise mit einer Drehzahl, bei der die Umfangsgeschwindigkeit dieser Rollen der Laufgeschwindigkeit der Folie 3 entspricht. Dies ist jedoch keine notwendige Voraussetzung. Die beschriebenen Hafteffekte sind auch zu beobachten, wenn sich die Rollen nicht drehen oder deren Umfangsgeschwindigkeit geringer ist als die Laufgeschwindigkeit der Folie 3.

Damit bei den Messungen nur die gewünschte Größe ,,Oberflächenenergie der Folie'' erfaßt wird, müssen alle übrigen Größen, welche die Messungen beeinflussen können, erfaßt und bei der Aufbereitung des Meßsignals berücksichtigt werden. Dazu sind im Bereich der Vorrichtung verschiedene Detektoren vorgesehen, welche ihre Ausgangssignale an die Signalaufbereitungseinheit liefern. Beispielsweise können Temperatur und Luftfeuchtigkeit durch Fühler erfaßt werden. Die Abzugsgeschwindigkeit kann beispielsweise über die Drehzahl einer Rolle gemessen werden, zur Messung der Abzugskraft verwendet man eine sogenannte Kraftmeßrolle.

In einer weiteren alternativen Ausführungsform wird die Folie 3 über eine erste Rolle 1 geführt und von dieser ersten Rolle 1 aus ihrer Bewegungsrichtung abgelenkt. Bei der ersten Rolle 1 wird dabei das von der Folie 3 auf die erste Rolle 1 übertragene Drehmoment gemessen. Dies kann beispielsweise dadurch erfolgen, daß die erste Rolle 1 immer gerade so weit abgebremst wird, daß die Bewegungsgeschwindigkeit der Folie 3 sich um einen bestimmten Betrag von der Umfangsgeschwindigkeit der ersten Rolle 1 unterscheidet. Die dabei zur Abbremsung der ersten Rolle 1 notwendige Bremskraft bzw. das entsprechende Drehmoment ist ein Maß für das übertragene Drehmoment. Bei hoher Oberflächenenergie der Folie 3 vergrößert sich die Gleitreibung mit der Rollenoberfläche und damit das übertragene Drehmoment. Das Ausgangssignal dieses Drehmomentdetektors kann also als Maß für die Oberflächenenergie der Folie 3 herangezogen werden.

Ein ebenfalls auf der Gleitreibungsmessung beruhendes Meßprinzip kommt bei der in Figur 4 dargestellten Ausführungsform zum Einsatz. Dabei wird bei einem etwa geraden Verlauf der Folie 3 ein Probekörper 19, vorzugsweise ein lappenartiger Gegenstand wie beispielsweise eine weitere Folie, in innigen Kontakt mit der Folie 3 gebracht. Dies geschieht vorzugsweise durch die eigene Schwerkraft des Probekörpers 19. Am Ende des Probekörpers 19 ist eine Kraftmeßvorrichtung 18, welche die von der Folie 3 auf den Probekörper 19 übertragene Reibungskraft mißt. Wegen der sich ständig bewegenden Folie 3 ist dies eine Gleitreibungskraft. Die Größe dieser Gleitreibungskraft wächst mit der Höhe der Oberflächenenergie der zu untersuchenden Folie. Das Ausgangssignal der Kraftmeßvorrichtung 18 wird einer Signalverarbeitungseinheit 17 zugeführt, wo es in bekannter Weise aufbereitet werden kann und dient wiederum als Maß für die Oberflächenenergie der Folie.

Alle genannten Verfahren können Verwendung finden, um den Einfluß einer Vorbehandlung, wie beispielsweise einer Coronaentladung, auf die Folie zu ermitteln. Zur besseren Bestimmung des Einflusses der Coronaentladung kann eine der Meßvorrichtungen vor der Coronastation, eine zweite dahinter angeordnet sein. Das oder die Ausgangssignale der einzelnen Meßvorrichtungen werden dann, nach Aufbereitung durch die Signalverarbeitungseinheit, der Steuereinheit des Coronagenerators zugeführt, um dessen Ausgangsleistung so zu regeln, daß die Oberflächenenergie auf einem einstellbaren Wert konstant gehalten wird.

Insbesondere bei breiten Folien empfiehlt es sich, an mehreren Stellen über die Breite der Folie gesehen zu messen. Dies kann simultan oder sukzessiv geschehen. Bei den optischen Meßverfahren kann beispielsweise der Laserstrahl die Folienoberfläche über deren Breite abtasten, wobei natürlich der Detektor folgen muß. Bei den mechanischen Verfahren können mehrere Meßvorrichtungen entlang der Folienbreite angeordnet sein. Auch hier kann wieder vor einer Coronastation und danach gemessen werden. Sämtliche erhaltenen Ausgangssignale werden einer Signalverarbeitungseinheit zugeführt und dort aufbereitet. Wenn über die Folienbreite verschiedene Oberflächenenergien gemessen wurden, kann die Ausgangsleistung des Coronagenerators in einem begrenzten Raumbereich verstellt werden oder der Entladungsspalt der Coronaentladung ausgerichtet werden.

Mit dem beschriebenen Verfahren lassen sich auch die Oberflächeneigenschaften nichtpolymerer Folien meßtechnisch erfassen. Beispielsweise kann es bei Warenbahnen aus Papier eingesetzt werden, welche zur besseren Kaschierbarkeit ebenfalls einer energiereichen Vorbehandlung ausgesetzt werden. Auch kann die Oberfläche von Metallfolien, beispielsweise Aluminiumfolien, untersucht werden.

## Patentansprüche

1. Verfahren zur Messung der Oberflächenenergie einer sich in einer Richtung fortbewegenden Folie (3) durch eine Messung der Oberflächenkräfte, **dadurch gekennzeichnet**, daß zur Messung der Oberflächenkräfte die Folie (3) über mindestens eine erste Rolle (1) und anschließend über eine Umlenkeinheit geführt wird, hierbei an mindestens einer Stelle die Abweichung des tatsächlichen Folienverlaufs (8) vom kürzestmöglichen Folienverlauf (7) zwischen der ersten Rolle (1) und der Umlenkeinheit ermittelt und diese Abweichung als Maß für die Oberflächenenergie der in Kontakt mit der ersten Rolle (1) stehenden Seite der Folie (3) herangezogen wird.

2. Verfahren nach Anspruch 1, **dadurch gekennzeichnet**, daß die Umlenkeinheit eine zweite Rolle (2) ist.

3. Verfahren nach Anspruch 1 oder 2, **dadurch gekennzeichnet**, daß die Messung der Abweichung des tatsächlichen Folienverlaufs (8) vom kürzestmöglichen Folienverlauf (7) durch Reflexion eines Lichtstrahls an einer der Oberflächen der Folie (3) nach Verlassen der ersten Rolle (1) erfolgt.

4. Verfahren nach Anspruch 3, **dadurch gekennzeichnet**, daß als Lichtstrahl ein Laserstrahl (13) verwendet wird.

5. Verfahren nach Anspruch 1 oder 2, **dadurch gekennzeichnet**, daß die Messung der Abweichung des tatsächlichen Folienverlaufs (8) vom kürzestmöglichen Folienverlauf (7) durch Messung der Berührungsfläche der Folie (3) mit der ersten Rolle (1) erfolgt.

6. Verfahren nach Anspruch 5, **dadurch gekennzeichnet**, daß die Messung der Berührungsfläche kapazitiv erfolgt.

7. Verfahren nach einem der voranstehenden Ansprüche, **dadurch gekennzeichnet**, daß die erste Rolle (1) während der Messung still steht.

8. Verfahren nach einem der Ansprüche 1 bis 6, **dadurch gekennzeichnet,** daß sich die erste Rolle (1) während der Messung dreht.

9. Verfahren nach Anspruch 8, **dadurch gekennzeichnet**, daß die Umfangsgeschwindigkeit der ersten Rolle (1) gleich der Geschwindigkeit der Folie (3) ist.

10. Verfahren nach einem der voranstehenden Ansprüche, **dadurch gekennzeichnet**, daß die Abzugskraft der Folie (3) erfaßt und bei der Berechnung der Oberflächenenergie berücksichtigt wird.

11. Verfahren nach Anspruch 10, **dadurch gekennzeichnet**, daß die erste Rolle (1) oder die zweite Rolle (2) zur Messung der Abzugskraft als Kraftmeßrolle ausgebildet ist.

12. Verfahren zur Messung der Oberflächenenergie einer sich in einer Richtung fortbewegenden Folie (3) durch eine Messung der Oberflächenkräfte, **dadurch gekennzeichnet**, daß zur Messung der Oberflächenkräfte die Folie (3) über mindestens eine erste Rolle (1) geführt wird, deren Umfangsgeschwindigkeit von der Geschwindigkeit der Folie (3) abweicht, hierbei die Gleitreibungskraft zwischen der Folie (3) und der ersten Rolle (1) gemessen und diese Gleitreibungskraft als Maß für die Oberflächenenergie der in Kontakt mit der ersten Rolle (1) stehenden Seite der Folie (3) herangezogen wird.

13. Verfahren nach Anspruch 12, **dadurch gekennzeichnet**, daß die Messung der Gleitreibungskraft durch Messung des von der Folie (3) auf die erste Rolle (1) übertragenen Drehmoments erfolgt.

14. Verfahren nach Anspruch 12, **dadurch gekennzeichnet**, daß die Messung der Gleitreibungskraft durch Messung der auf die Folie (3) wirkenden Abzugskraft erfolgt.

15. Verfahren nach Anspruch 13, **dadurch gekennzeichnet,** daß die erste Rolle (1) mit einem Drehmoment abgebremst wird, bei dem die Differenz zwischen der Geschwindigkeit der Folie (3) und der Umfangsgeschwindigkeit der ersten Rolle (1) einen konstanten Wert annimmt und dieses Drehmoment als Maß des von der Folie (3) auf die erste Rolle (1) übertragenen Drehmoments herangezogen wird.

16. Verfahren zur Messung der Oberflächenenergie einer sich in einer Richtung fortbewegenden Folie (3) durch eine Messung der Oberflächenkräfte, **dadurch gekennzeichnet**, daß zur Messung der Oberflächenkräfte die Folie (3) schleifend an der Oberfläche eines Probekörpers (19) entlanggeführt und die von der Folie (3) auf den Probekörper (19) übertragene, parallel zur Folienlaufrichtung wirkende Gleitreibungskraft gemessen und als Maß für die Oberflächenenergie der in Kontakt mit dem Probekörper (19) stehenden Seite der Folie (3) herangezogen wird.

17. Verfahren nach Anspruch 16, **dadurch gekennzeichnet**, daß als Probekörper (19) ein Folienstück oder ein lappenartiger Gegenstand verwendet wird.

18. Verfahren nach einem der vorhergehenden Ansprüche, **dadurch gekennzeichnet**, daß das, gegebenenfalls aufbereitete Meßsignal als Ist-Wert einer Corona-Station zugeführt wird, dort mit einem Soll-Wert verglichen wird und eine Nachregelung der Ausgangsleistung eines Corona-Generators aufgrund der erhaltenen Abweichung erfolgt.

19. Verfahren nach Anspruch 18, **dadurch gekennzeichnet**, daß quer zur Laufrichtung der Folie (3) an mehreren Stellen gemessen wird und diese Meßsignale zu einer ortsabhängigen Nachregelung der Ausgangsleistung dem Corona-Generator zugeführt werden.

20. Verwendung des Verfahrens nach einem der vorhergehenden Ansprüche zur Bestimmung der Oberflächenenergie einer Folie (3) aus einem Polymer.

21. Verwendung des Verfahrens nach einem der Ansprüche 1 bis 19 zur Bestimmung der Oberflächenenergie einer Warenbahn aus Papier.
